(19) Europäisches Patentamt
European Patent Office
Office européen des brevets

(11) **EP 3 073 423 A1**

(12) **EUROPÄISCHE PATENTANMELDUNG**

(43) Veröffentlichungstag:
**28.09.2016 Patentblatt 2016/39**

(51) Int Cl.:
*G06Q 10/04* *(2012.01)*     *G06Q 10/06* *(2012.01)*

(21) Anmeldenummer: **15196059.8**

(22) Anmeldetag: **24.11.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **26.03.2015 DE 102015205482**

(71) Anmelder: **Volkswagen Aktiengesellschaft 38440 Wolfsburg (DE)**

(72) Erfinder: **THEIMER, Wolfgang 44879 Bochum (DE)**

(54) **VORRICHTUNG, VERFAHREN UND COMPUTERPROGRAMM ZUM ERSTELLEN EINER ZEITLICHEN ABFOLGE VON AKTIVITÄTEN EINES NUTZERS**

(57) Ausführungsbeispiele beziehen sich auf eine Vorrichtung (100) zum Erstellen einer zeitlichen Abfolge von Aktivitäten eines Nutzers. Die Vorrichtung (100) umfasst ein Speichermodul (110), welches dazu ausgebildet ist, wenigstens eine Information über eine geplante Aktivität (111) des Nutzers zu speichern. Die Information über die Aktivität (111) umfasst wenigstens einen für den Nutzer zur Verfügung stehenden Zeitraum (112) zur Durchführung der Aktivität. Die Vorrichtung (100) umfasst außerdem ein Zuordnungsmodul (120), welches dazu ausgebildet ist, wenigstens eine Kombination aus einem möglichen Beginn (121) und einer möglichen Zeitdauer (122) der Aktivität innerhalb des dem Nutzer zur Verfügung stehenden Zeitraums (112) zu ermitteln und der wenigstens einen Kombination einen Gewichtungskoeffizienten (123) zuzuordnen. Die Vorrichtung (100) umfasst weiterhin ein Berechnungsmodul (130), welches dazu ausgebildet ist, aus der wenigstens einen Kombination aus möglichem Beginn (121) und möglicher Zeitdauer (122) der Aktivität eine Auswahl zu treffen. Die Auswahl wird derart getroffen, dass ein Gewichtungsterm (131), welcher den der ausgewählten Kombination zugeordneten Gewichtungskoeffizienten (123) umfasst, einen vordefinierten Grenzwert (132) nicht überschreitet, und die Auswahl aus Beginn (121) und Zeitdauer (122) der Aktivität eine zusätzliche Zeitdauer (133) einer im Speichermodul (110) gespeicherten zusätzlichen Aktivität nicht überschneidet.

FIG. 1

**Beschreibung**

Die vorliegenden Ausführungsbeispiele liegen auf dem Gebiet der Vorrichtungen und Verfahren zum Erstellen einer zeitlichen Abfolge von Aktivitäten eines Nutzers.

Im alltäglichen Gebrauch finden Mobilitätsdienste, welche einen Nutzer bei der Planung für seine persönliche Mobilität unterstützen, vielfach Verwendung. Verschiedene Mobilitätsdienste können dabei beispielsweise eine Auswahl an Routen, Witterungsverhältnisse, Verkehrsinformationen oder auch Kosten bei der Planung berücksichtigen. Jedoch können sich solche Informationen zeitlich schnell ändern. Dadurch kann es geschehen, dass die Ansprüche des Nutzers lediglich teilweise und nicht ausreichend erfüllt werden. Erhöhtes Verkehrsaufkommen oder eine starke Vernetzung von Verkehrsteilnehmern können diese Probleme möglicherweise sogar verschärfen. Zwar können Informationen, die einen Einfluss auf die Mobilität des Nutzers haben könnten, beispielsweise von externen Anbietern über Internet zur Verfügung gestellt werden, jedoch bleiben diese Informationen in vielen Fällen unberücksichtigt. Ferner kann es bei einigen Mobilitätsdiensten problematisch werden, innerhalb eines vorgegebenen Zeitrahmens auf eine Veränderung von Bedingungen zu reagieren, oder dem Nutzer eine Mobilitätsinformation rechtzeitig mitzuteilen. Zudem können häufig für eine zuverlässige Planung mittels eines herkömmlichen Mobilitätsdienstes weitere Eingaben durch den Nutzer erforderlich werden, was eine Handhabung erschweren kann.

Mithin ist es wünschenswert, ein Konzept für eine Planung einer Mobilität eines Nutzers für den Nutzer zu vereinfachen.

Diesem Bedarf tragen eine Vorrichtung, ein Verfahren und ein Computerprogramm mit den Merkmalen der unabhängigen Patentansprüche Rechnung. Weitere vorteilhafte Ausführungsformen und Weiterbildungen sind Gegenstand der abhängigen Patentansprüche.

Gemäß einem ersten Aspekt beziehen sich Ausführungsbeispiele auf eine Vorrichtung zum Erstellen einer zeitlichen Abfolge von Aktivitäten eines Nutzers. Die Vorrichtung umfasst ein Speichermodul, welches dazu ausgebildet ist, wenigstens eine Information über eine geplante Aktivität des Nutzers zu speichern. Die Information über die Aktivität umfasst wenigstens einen für den Nutzer zur Verfügung stehenden Zeitraum zur Durchführung der Aktivität. Die Vorrichtung umfasst außerdem ein Zuordnungsmodul, welches dazu ausgebildet ist, wenigstens eine Kombination aus einem möglichen Beginn und einer möglichen Zeitdauer der Aktivität innerhalb des dem Nutzer zur Verfügung stehenden Zeitraums zu ermitteln und der wenigstens einen Kombination einen Gewichtungskoeffizienten zuzuordnen. Die Vorrichtung umfasst weiterhin ein Berechnungsmodul, welches dazu ausgebildet ist, aus der wenigstens einen Kombination aus möglichem Beginn und möglicher Zeitdauer der Aktivität eine Auswahl zu treffen. Die Auswahl wird derart getroffen, dass ein Gewichtungsterm, welcher den der ausgewählten Kombination zugeordneten Gewichtungskoeffizienten umfasst, einen vordefinierten Grenzwert nicht überschreitet, und die Auswahl aus Beginn und Zeitdauer der Aktivität eine zusätzliche Zeitdauer einer im Speichermodul gespeicherten zusätzlichen Aktivität nicht überschneidet. Dies kann eine Planung von Aktivitäten oder eines Zeitplans mit diesen Aktivitäten insofern erleichtern, dass für andere Aktivitäten vorgesehene Zeiträume in Betracht gezogen oder ggf. neu angepasst werden. Der Zeitplan kann somit möglicherweise auch hinsichtlich einer Gesamtmenge an geplanten Aktivitäten effizienter gestaltet werden. Dabei können weitere Eingaben des Nutzers möglicherweise entfallen.

Bei einigen Ausführungsbeispielen ist das Zuordnungsmodul dazu ausgebildet, die mögliche Zeitdauer abhängig von dem möglichen Beginn der Aktivität, und/oder umgekehrt, festzulegen. Somit kann eine flexible, zeitlich veränderbare Planung ermöglicht werden, welche auch temporäre Gegebenheiten, wie beispielsweise Stoßzeiten im Verkehr oder wetterbedingte Einflüsse berücksichtigen kann.

Bei manchen Ausführungsbeispielen ist das Speichermodul dazu ausgebildet, die Information über die Aktivität zu speichern. Dabei umfasst die Information eine vordefinierte Ortsinformation für den Ort der Aktivität. Somit kann es möglich sein, die zeitliche Abfolge von Aktivitäten mit einer Navigation zu einem Zielort zu verbinden oder an einer solchen zu orientieren.

Bei einigen Ausführungsbeispielen ist das Zuordnungsmodul dazu ausgebildet, die Zeitdauer basierend auf der Ortsinformation festzulegen. Es kann so ermöglicht werden, eine Routenplanung hinsichtlich eines Zeitaufwandes zu verbessern, oder auch unterschiedliche Routen oder Verkehrsmittel miteinander zu vergleichen.

Bei manchen Ausführungsbeispielen ist das Zuordnungsmodul dazu ausgebildet, der wenigstens einen Kombination den Gewichtungskoeffizienten basierend auf einer Entfernung zwischen einer der Ortsinformation entsprechenden Position und einer Ausgangsposition des Nutzers zuzuordnen. Somit kann ein Aufwand an Zeit für eine zurückzulegende Strecke mitberücksichtigt werden.

Bei einigen Ausführungsbeispielen ist das Zuordnungsmodul dazu ausgebildet, der wenigstens einen Kombination den Gewichtungskoeffizienten zuzuordnen. Dabei entspricht die Ausgangsposition einer der zusätzlichen Aktivität zugeordneten zusätzlichen Ortsinformation. Hierdurch kann ein Übergang von einer Aktivität zu der zusätzlichen, nächsten Aktivität ermöglicht werden, bei dem mögliche Umwege entfallen können.

Bei manchen Ausführungsbeispielen ist das Berechnungsmodul dazu ausgebildet, basierend auf der Ortsinformation ein Anforderungssignal an ein weiteres Speichermodul zu senden, welches ein Bereitstellen einer der Ortsinformation entsprechenden Koordinatenangabe bewirkt. Dies kann ggf. eine breitere Auswahl an Eingabemöglichkeiten eines Ortes durch einen Nutzer erlauben.

Bei einigen Ausführungsbeispielen ist das Berechnungsmodul dazu ausgebildet, die Kombination aus möglichem Beginn und möglicher Zeitdauer der Aktivität mit einer weiteren Kombination aus einem weiteren möglichen Beginn und einer weiteren möglichen Zeitdauer der Aktivität innerhalb des Zeitraums zu vergleichen. Das Berechnungsmodul ist außerdem dazu ausgebildet, basierend auf dem Vergleichen ein lokales oder globales Minimum des Gewichtungsterms zu ermitteln. Das Berechnungsmodul ist weiterhin dazu ausgebildet, den möglichen Beginn und die mögliche Zeitdauer der Aktivität und/oder einen zusätzlichen möglichen Beginn und die zusätzliche mögliche Zeitdauer der zusätzlichen Aktivität, welche dem Minimum des Gewichtungsterms innerhalb eines vordefinierten Toleranzbereichs entsprechen, an den Nutzer bereitzustellen. Dies kann es ermöglichen, dass ein Zeit- oder Kostenaufwand für wenigstens die Aktivität vermindert oder sogar optimiert wird.

Bei manchen Ausführungsbeispielen ist das Speichermodul dazu ausgebildet, die Information über die Aktivität zu speichern. Dabei umfasst die Information ein präferiertes Zeitintervall für den möglichen Beginn und die mögliche Zeitdauer der Aktivität innerhalb des Zeitraumes. Dadurch können seitens des Nutzers Einschränkungen mit erhöhter Genauigkeit vorgebbar sein.

Bei einigen Ausführungsbeispielen ist das Zuordnungsmodul dazu ausgebildet, den Gewichtungskoeffizienten basierend auf einer zeitlichen Lage des möglichen Beginns der Aktivität relativ zu dem präferierten Zeitintervall zu bestimmen. Dies kann es möglicherweise gestatten, zeitliche Schwankungen innerhalb des Intervalls zu berücksichtigen oder auch eine verstärkte Gewichtung von aus Benutzersicht ungünstigen Zeiten außerhalb des Intervalls zu bewirken.

Bei manchen Ausführungsbeispielen ist das Zuordnungsmodul dazu ausgebildet, die Zeitdauer oder den möglichen Beginn der Aktivität dem Gewichtungskoeffizienten über eine nichtlineare Beziehung zuzuordnen. Dies kann es ermöglichen, beispielsweise einen geringfügigen Zeitaufwand unter einer vorgegebenen Grenze bei der Gewichtung zu vernachlässigen.

Bei einigen Ausführungsbeispielen ist das Zuordnungsmodul dazu ausgebildet, den Gewichtungskoeffizienten auf einen vorgegebenen Wert oberhalb des vordefinierten Grenzwertes zu setzen, wenn der mögliche Beginn der Aktivität außerhalb des präferierten Zeitintervalls liegt. Hierdurch kann eine Planung einer Aktivität außerhalb eines nutzerdefinierten Zeitintervalls erschwert oder sogar verhindert werden.

Bei manchen Ausführungsbeispielen ist das Zuordnungsmodul dazu ausgebildet, der zusätzlichen Aktivität einen zusätzlichen Gewichtungskoeffizienten zuzuordnen. Dabei ist das Berechnungsmodul dazu ausgebildet, den Gewichtungsterm als Summe des Gewichtungskoeffizienten und des zusätzlichen Gewichtungskoeffizienten zu berechnen. Hiermit kann eine mathematische Vorschrift für einen genauen Vergleich mehrerer Planungsmöglichkeiten definiert werden, was ggf. eine Verbesserung einer Effizienz bei der Planung verbessern kann.

Gemäß einem weiteren Aspekt beziehen sich Ausführungsbeispiele auf ein Verfahren zum Erstellen einer zeitlichen Abfolge von Aktivitäten eines Nutzers. Das Verfahren umfasst ein Speichern wenigstens einer Information über eine geplante Aktivität des Nutzers. Die Information über die Aktivität umfasst wenigstens einen für den Nutzer zur Verfügung stehenden Zeitraum zur Durchführung der Aktivität. Das Verfahren umfasst außerdem ein Ermitteln wenigstens einer Kombination aus einem möglichen Beginn und einer möglichen Zeitdauer der Aktivität innerhalb des dem Nutzer zur Verfügung stehenden Zeitraums. Das Verfahren umfasst zudem ein Zuordnen eines Gewichtungskoeffizienten zu der wenigstens einen Kombination. Das Verfahren umfasst ferner ein Treffen einer Auswahl aus der wenigstens einen Kombination aus möglichem Beginn und möglicher Zeitdauer der Aktivität derart, dass ein Gewichtungsterm, welcher den der ausgewählten Kombination zugeordneten Gewichtungskoeffizienten umfasst, einen vordefinierten Grenzwert nicht überschreitet, und die Auswahl aus Beginn und Zeitdauer der Aktivität eine zusätzliche Zeitdauer einer im Speichermodul gespeicherten zusätzlichen Aktivität nicht überschneidet. Somit kann eine Planung von Aktivitäten geschaffen werden, bei der Widersprüche möglicherweise entfallen können. Ferner kann unter Umständen eine zeitliche Flexibilität bei der Planung verbessert werden, oder eine Möglichkeit zur Planung geschaffen werden, welche eine Anpassung der Planung an zeitlich variable Randbedingungen gestattet.

Darüber hinaus schaffen weitere Ausführungsbeispiele auch ein Programm oder Computerprogramm mit einem Programmcode zum Durchführen eines der genannten Verfahren, wenn der Programmcode auf einem Computer, einem Prozessor oder einer programmierbaren Hardwarekomponente, wie z.B. einer applikationsspezifischen integrierten Schaltung (ASIC), ausgeführt wird.

Nachfolgend werden unter Bezugnahme auf die beigefügten Figuren einige exemplarische Ausführungsbeispiele näher beschrieben und erläutert. Es zeigen im Einzelnen:

Fig. 1    ein Blockdiagramm einer Vorrichtung zum Erstellen einer zeitlichen Abfolge von Aktivitäten eines Nutzers gemäß einem Ausführungsbeispiel;

Fig. 2    eine graphische Darstellung eines Gewichtungskoeffizienten in Abhängigkeit von einem Beginn einer Aktivität gemäß einem Ausführungsbeispiel;

Fig. 3    eine graphische Darstellung einer Zeitdauer einer Aktivität in Abhängigkeit von einem Beginn einer Aktivität gemäß einem Ausführungsbeispiel;

Fig. 4    eine graphische Darstellung von Korrelationen zwischen einer Zeitdauer einer Aktivität und einem Gewichtungskoeffizienten gemäß mehreren Ausführungsbeispielen;

Fig. 5    ein Blockdiagramm einer Architektur eines Programms zum Durchführen eines Verfahrens zum Erstellen einer zeitlichen Abfolge von Aktivitäten eines Nutzers gemäß einem Ausführungsbeispiel;

Fig. 6    ein Blockdiagramm für eine Interaktion eines Nutzers mit einem Programm zum Durchführen eines Verfahrens zum Erstellen einer zeitlichen Abfolge von Aktivitäten eines Nutzers gemäß einem Ausführungsbeispiel; und

Fig. 7    ein Ablaufdiagramm eines Verfahrens zum Erstellen einer zeitlichen Abfolge von Aktivitäten eines Nutzers gemäß einem weiteren Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "gekoppelt" bezeichnet wird, mit dem anderen Element direkt verbunden oder gekoppelt sein kann oder dass dazwischenliegende Elemente vorhanden sein können. Wenn ein Element dagegen als "direkt verbunden" oder "direkt gekoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer", " eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist" und/oder "aufweisend", "umfasst" und/oder "umfassend" wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Eine Planung für eine persönliche Mobilität kann im Laufe der Zeit an Komplexität zunehmen. Dies kann durch zunehmenden Verkehr, steigende Kosten für Mobilität oder auch einen Anstieg der Vernetzung von Verkehrsteilnehmern bedingt sein, welche in einigen Fällen widersprüchliche und sich zeitlich schnell ändernde Anforderungen an ein persönliches Mobilitätsverhalten generieren können. Auf der anderen Seite existieren im Internet viele Informationsquellen (z.B. Routenplaner, Wetter, Verkehrs- und Mautinformationen, Mobilitätsdienstleistungen), die umfangreiche Daten für eine Mobilitätsplanung zur Verfügung stellen könnten. Der Benutzer kann dabei jedoch überfordert sein, eine für ihn hinreichend akzeptable Lösung z.B. für eine Fahrt zu finden, die ein Mindestmaß an relevanten Informationen berücksichtigt. Dies kann beispielsweise der Fall sein, wenn sich Randbedingungen ändern, oder der Benutzer nicht ausreichend Zeit für eine Reisevorbereitung hat.

Durch Ausführungsbeispiele wird angestrebt, einen persönlichen Mobilitäts-Agenten als Dienst einzuführen, der die Anforderungen des Benutzers (z.B. Reiseziele und -zeitraum oder Randbedingungen wie eine Kosten- oder Zeitminimierung) aufnimmt, autonom verkehrsrelevanten Datenbanken und Websites analysiert und dem Benutzer die Organisation von freigegebenen Zeitintervallen in Bezug auf die Mobilitätsziele abnimmt. Der Benutzer kann dabei einen Planungsvorschlag für einen reservierten Zeitraum erhalten, und ggf. lediglich den Vorschlag akzeptieren.

Es existieren viele konventionelle Routenplaner (Onboard- und Offboard-Lösungen), die eine Streckenplanung unter gegebenen Randbedingungen (z.B. Zeit oder Streckenlänge) durchführen können. Diese Lösungen können jedoch erst agieren, wenn der Benutzer seine Reiseanforderungen definiert und eingibt, also nicht autonom arbeiten. Ferner gibt es weitergehende Mobilitätslösungen, wie z.B. Moovel, die eine multimodale Reiseplanung mit verschiedenen Verkehrsmitteln planen, und auch die zugehörigen Kosten schätzen können. Aber auch hier kann es erforderlich sein, dass der Benutzer seine Eingaben für jeden Weg individuell vornimmt. Google Now kann beispielsweise dem Benutzer zu seinem bisherigen Aktivitätsprofil passende Empfehlungen geben, welche sich u. A. auch auf die Routenplanung beziehen können. Jedoch können diese herkömmlichen Lösungen auf sehr spezifischen Eingaben des Benutzers (z. B. Ziel oder Zeitraum) basieren oder Empfehlungen geben, die durch maschinelle Lernverfahren aus einem großen Benutzerquerschnitt ermittelt werden. Diese Lösungswege können jedoch in manchen Situationen nicht zum Einsatz kommen, da der Benutzer, auch wenn er seine Mobilitätswünsche kennt, in einer gegebenen Situation möglicherweise nicht die Zeit oder Muße hat, diese dem technischen System mitzuteilen. Ebenfalls kann es wünschenswert sein, dass ein System dem Benutzer nur Vorschläge macht, die verifiziert sind (z.B. durch kurzzeitige Reservierung eines vorgeschlagenen Parkplatzes). Es existieren herkömmliche Lösungen, die Teilaspekte der Mobilität automatisch optimieren können, z.B. eine automatische Routenneuplanung, wenn ein Fahrer einer vorgeschriebenen Route nicht folgt.

Ausführungsbeispiele zielen darauf ab, die genannten Umstände in einer integrierten Anwendung zusammen zu adressieren, und möglicherweise sogar eine automatische Planung von Handlungsabläufen basierend auf Kalender, Aufgabenlisten oder Anfragen zu gemeinsamen Treffen auszuführen.

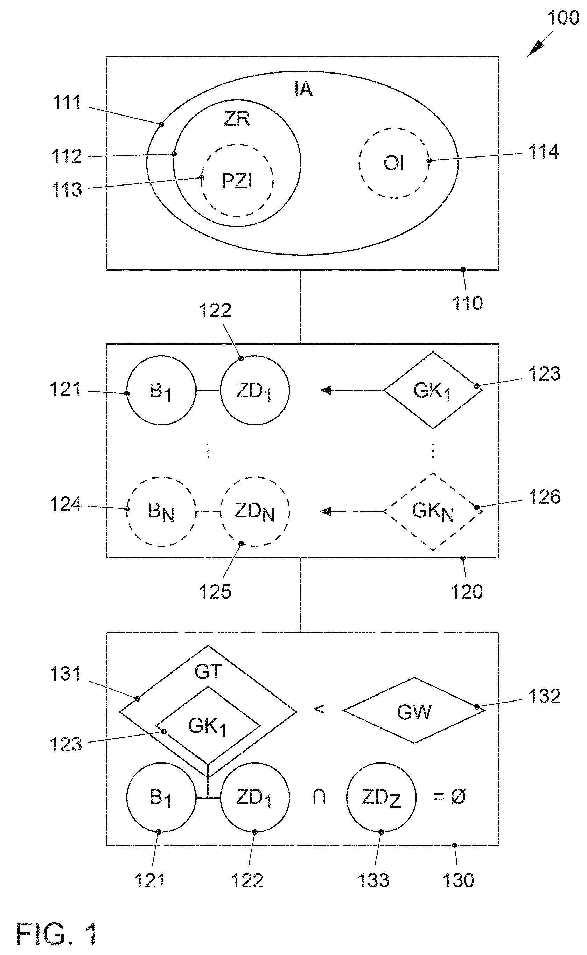

Fig. 1 zeigt ein Blockdiagramm einer Vorrichtung 100 zum Erstellen einer zeitlichen Abfolge von Aktivitäten eines Nutzers gemäß einem Ausführungsbeispiel. Die Vorrichtung 100 umfasst ein Speichermodul 110, welches dazu ausgebildet ist, wenigstens eine Information über eine geplante Aktivität 111 des Nutzers zu speichern. Die Information über die Aktivität 111 umfasst wenigstens einen für den Nutzer zur Verfügung stehenden Zeitraum 112 zur Durchführung der Aktivität. Die Vorrichtung umfasst außerdem ein Zuordnungsmodul 120, welches dazu ausgebildet ist, wenigstens eine Kombination aus einem möglichen Beginn 121 und einer möglichen Zeitdauer 122 der Aktivität innerhalb des dem Nutzer zur Verfügung stehenden Zeitraums 112 zu ermitteln und der wenigstens einen Kombination einen Gewichtungskoeffizienten 123 zuzuordnen. Die Vorrichtung umfasst weiterhin ein Berechnungsmodul 130, welches dazu ausgebildet ist, aus der wenigstens einen Kombination aus möglichem Beginn 121 und möglicher Zeitdauer 122 der Aktivität eine Auswahl zu treffen. Die Auswahl wird derart getroffen, dass ein Gewichtungsterm 131, welcher den der ausgewählten Kombination zugeordneten Gewichtungskoeffizienten 123 umfasst, einen vordefinierten Grenzwert 132 nicht überschreitet, und die Auswahl aus Beginn 121 und Zeitdauer 122 der Aktivität eine zusätzliche Zeitdauer 133 einer im Speichermodul 110 gespeicherten zusätzlichen Aktivität nicht überschneidet. Die in Fig. 1 verwendeten Abkürzungen bedeuten im Einzelnen: IA = Information über die Aktivität, ZR = Zeitraum, PZI = präferiertes Zeitintervall, OI = Ortsinformation, $B_n$ = möglicher Beginn der Aktivität ($n \in \{1, ... N\}$), $ZD_n$ = mögliche Zeitdauer der Aktivität ($n \in \{1, ... N\}$), $GK_n$ = Gewichtungskoeffizient ($n \in \{1, ... N\}$), GT = Gewichtungsterm, GW = Grenzwert, $ZD_Z$ = Zeitdauer einer zusätzlichen Aktivität. Dabei sind optional vorhandene Komponenten mittels gestrichelter Formen dargestellt.

Das Zuordnungsmodul 120 kann genauer gesagt eine Anzahl an N Kombinationen aus möglichem Beginn 121 und möglicher Zeitdauer 122 der Aktivität ermitteln. Dabei kann N eine beliebige natürliche Zahl sein. Dementsprechend kann optional eine oder mehrere weitere Kombinationen aus einem weiteren möglichen Beginn 124 und einer weiteren möglichen Zeitdauer 125 ermittelt, und dieser ein weiterer Gewichtungskoeffizient 126 zugeordnet werden. Der Zeitraum 112 kann beispielsweise eine vorgegebene Menge, Ausgangsmenge oder Gesamtmenge von Kombinationen aus je einem Beginn und einer Zeitdauer der Aktivität umfassen. Der mögliche Beginn 121 kann einem Anfangspunkt der möglichen Zeitdauer 122 entsprechen. Der Gewichtungskoeffizient 123 kann z. B. einem abstrakten Kostenbegriff entsprechen, welcher reale finanzielle Kosten und einer Zeiterfordernis entsprechende virtuelle Kosten berücksichtigt. Der Gewichtungskoeffizient 123 kann anders ausgedrückt ein Zahlenwert sein, der sich basierend auf einer Summe von finanziellen und zeitlichen Kosten (ggf. mit unterschiedlichen vordefinierten Gewichtungsfaktoren) berechnet. Der Gewichtungsterm 131 kann einem einzelnen oder auch einer Summe aus mehreren Gewichtungskoeffizienten 123 entsprechen. Dabei kann der Gewichtungsterm 131 für alle Aktivitäten, die innerhalb eines vorgegebenen Zeitraumes geplant (oder beispielsweise für solche Aktivitäten, deren gespeicherte Informationen 111 einen gemeinsamen Zeitraum 112 aufweisen) gelten. Der Gewichtungsterm 131 kann ferner bei nur einer gespeicherten Aktivität gleich dem Gewichtungskoeffizienten 123 sein. Die Zeitdauer 122 der Aktivität kann zunächst die Dauer einer die Aktivität definierenden Handlung umfassen, z. B. zu verrichtende Arbeit, ein Treffen des Nutzers mit einer weiteren Person oder einen Einkauf.

Bei weiteren Ausführungsbeispielen kann die Zeitdauer 122 auch eine An- und/oder Abreise umfassen. So kann bei manchen Ausführungsbeispielen lediglich die Anreise und die Handlung, nicht aber die Abreise umfasst sein, beispielsweise, wenn der Nutzer von einem Ort, an dem die Aktivität stattfindet, direkt zu einem zusätzlichen Ort weiterfährt, an dem die zusätzliche Aktivität stattfindet.

Das Speichermodul 110, Zuordnungsmodul 120 und Berechnungsmodul 130 können beispielsweise räumlich getrennt, und dabei über Schnittstellen zum Austausch von Daten oder Informationen miteinander in Verbindung stehen. Alternativ können Speichermodul 110, Zuordnungsmodul 120 und Berechnungsmodul 130 auch in einer gemeinsamen Komponente integriert, oder von dieser gebildet werden. Die gemeinsame Komponente ist in einem Ausführungsbeispiel ein Prozessor, kann aber auch eine anwendungsspezifische integrierte Schaltung (ASIC), ein Mikrocontroller, Chip oder anderweitig programmierbare Hardwarekomponente sein, oder eine solche umfassen. Die von dem Speichermodul 110, Zuordnungsmodul 120 und Berechnungsmodul 130 (oder der gemeinsamen Hardwarekomponente) ausgeführten, oben beschriebenen Funktionalitäten sind in einem Ausführungsbeispiel als Programm oder Software implementiert. Dieses Programm wird im Folgenden auch als Mobilitätsagent oder intelligenter Mobilitätsagent bezeichnet.

Durch den Nutzer kann eine Vorgabe einer Aktivitätsliste mit wenigstens einer, oder auch mehreren Aktivitäten erfolgen. Eine Verbesserung oder sogar Optimierung des intelligenten Mobilitätsagenten kann durch Minimierung einer Kostenfunktion erfolgen, bei der eine Anzahl an zu erfüllenden Aufgaben mit Kosten (finanziellen Ausgaben und erlaubte Zeitintervalle) belegt werden und eine Summation über alle Kosten durchgeführt wird.

Anders ausgedrückt ist bei einigen Ausführungsbeispielen das Berechnungsmodul 130 dazu ausgebildet, die Kombination aus möglichem Beginn 121 und möglicher Zeitdauer 122 der Aktivität mit der weiteren Kombination aus dem weiteren möglichen Beginn 124 und der weiteren möglichen Zeitdauer 125 der Aktivität innerhalb des Zeitraums 112 zu vergleichen. Das Berechnungsmodul 130 ist außerdem dazu ausgebildet, basierend auf dem Vergleichen ein lokales oder globales Minimum des Gewichtungsterms 131 zu ermitteln. Das Berechnungsmodul 130 ist weiterhin dazu ausgebildet, den möglichen Beginn 121 und die mögliche Zeitdauer 122 der Aktivität und/oder einen zusätzlichen möglichen Beginn und die zusätzliche mögliche Zeitdauer 133 der zusätzlichen Aktivität, welche dem Minimum des Gewichtungsterms 131 innerhalb eines vordefinierten Toleranzbereichs entsprechen, an den Nutzer bereitzustellen. Das lokale oder globale Minimum des Gewichtungsterms 131 kann einem aus Nutzersicht präferierten oder bestmöglichen Kompromiss aus Zeitaufwand und Kostenaufwand für die gegebene Aktivitätsliste entsprechen. Auch kann eine Ermittlung lediglich nach Reduzierung von finanziellem Aufwand oder lediglich nach Reduzierung von Zeitaufwand erfolgen. "Innerhalb eines vordefinierten Toleranzbereichs" kann dabei z. B. bedeuten, dass ein Kosten- und/oder Zeitaufwand bis zu 10% über dem Minimum des Gewichtungsterms 131 liegen darf. Der Toleranzbereich kann beispielsweise dem vordefinierten Grenzwert 132 entsprechen, aber auch nach unten von diesem abweichen. Eine Vordefinition von Werten oder Wertebereichen kann z.B. durch den Nutzer erfolgen, und vor einer Erstellung eines Zeitablaufs von Aktivitäten vermittels des Mobilitätsagenten stattgefunden haben.

Bei diesem Ausführungsbeispiel sind der mögliche Beginn 121, die mögliche Zeitdauer 122, der weitere mögliche Beginn 124 und die weitere mögliche Zeitdauer 125 jeweils der Aktivität zugeordnet. Der Gewichtungskoeffizient 123 geht dabei alternativ zu dem weiteren Gewichtungskoeffizienten 126 in den Gewichtungsterm 131 ein. Hingegen sind der zusätzliche mögliche Beginn und die zusätzliche mögliche Zeitdauer 133 der von der Aktivität verschiedenen zusätzlichen Aktivität zugeordnet. Der zusätzliche mögliche Beginn und die zusätzliche mögliche Zeitdauer 133 können eine zusätzliche Kombination bilden, die einem zusätzlichen Gewichtungskoeffizienten zugeordnet sind. Der zusätzliche Gewichtungskoeffizient geht dabei zusätzlich in den Gewichtungsterm 131 ein, beispielsweise durch Summation mit dem Gewichtungskoeffizienten 123 oder dem weiteren Gewichtungskoeffizienten 126. Mit anderen Worten ist bei manchen Ausführungsbeispielen das Zuordnungsmodul 120 dazu ausgebildet, der zusätzlichen Aktivität einen zusätzlichen Gewichtungskoeffizienten zuzuordnen. Dabei ist das Berechnungsmodul 130 dazu ausgebildet, den Gewichtungsterm 131 als Summe des Gewichtungskoeffizienten 123 und des zusätzlichen Gewichtungskoeffizienten zu berechnen. Anders ausgedrückt kann beispielsweise für jede Aktivität einzeln ein Minimum des Gewichtungskoeffizienten 123, oder auch in Zusammenschau aller (z.B. an einem Tag) zu erledigenden Aktivitäten ein Minimum des Gewichtungsterms 131 ermittelt werden.

Der Nutzer kann in dem Speichermodul 110 Informationen über eine einzelne oder auch eine Mehrzahl an Aktivitäten abspeichern. Exemplarisch sei hierbei $A$ eine Aktivitätenliste mit $N$ verpflichtenden Aufgaben $A_i$ und $M$ optionalen Aufgaben $O_i$. Die *Menge A* umfasst somit die Elemente $\{A_1,.... A_N, O_1,... O_M\}$. Die Begriffe "verpflichtend" und "optional" können benutzerdefiniert sein. Dabei kann z. B. eine verpflichtende Aufgabe (Aktivität) innerhalb eines begrenzten Zeitraumes, beispielsweise dem Zeitraum 112, von der Vorrichtung 100 eingeplant werden. Eine optionale Aufgabe (Aktivität) kann ggf. auch außerhalb des Zeitraumes, also in einem weiteren von dem Zeitraum 112 verschiedenen Zeitraum, von der Vorrichtung 100 eingeplant werden.

Nun kann eine Reihenfolge der Aktivitäten frei vertauscht werden (vgl. hierzu auch "Traveling Salesman-Problem"), so dass alle $N!$ Permutationen für die verpflichtende Aktivitätenliste untersuchbar sind. Allerdings kann es durch Benutzerdefinition Einschränkungen (wie z.B. feste Ortstermine) geben, sodass die Anzahl von zu untersuchenden Alternativen gegenüber der möglichen Anzahl $N!$ an Permutationen eingeschränkt sein kann. Ist die verpflichtende Aufgabenliste unter einem gegebenen Kostenlimit (welches z.B. dem Grenzwert 132 entsprechen kann) erfüllt, können optionale Aufgaben hinzugenommen werden. Dabei kann sich eine Anzahl der Permutationen auf (N+M)! erhöhen.

Die Information über die Aktivität 111, die z. B. im Rahmen eines Kalendereintrags durch den Nutzer oder durch Heuristiken automatisch in dem Speichermodul 110 gespeichert werden kann, kann mehrere Teilinformationen umfassen. Bei einigen Ausführungsbeispielen ist eine solche Teilinformation eine vordefinierte Ortsinformation 114 für einen Ort der Aktivität. Die Ortsinformation 114 kann als Adresse, Positionskoordinaten oder als durch den Nutzer vordefinierte Adressen oder Lokalitäten (z.B. Büro, zu Hause, Tankstelle, Supermarkt) angegeben werden. Vordefiniert bedeutet beispielsweise, dass die Ortsinformation eindeutig einer Koordinatenposition zuordenbar ist. So kann ein Benutzer unter dem Begriff "Zuhause" eine eindeutige Adresse oder Koordinatenposition auf dem Speichermodul 110 hinterlegen, und bei einer darauffolgenden Eingabe des Begriffes "Zuhause" durch den Benutzer könnte eine Zuordnung dieses Begriffes zu der eindeutigen Adresse ohne weitere Benutzereingabe erfolgen. Vordefiniert kann auch bedeuten, dass die Ortsinformation zumindest auf eine in einem benutzerdefinierten Umkreis gelegene Mehrzahl eindeutig zuordenbarer Orte eingeschränkt werden kann. Z. B. könnte die Ortsinformation "Tankstelle" einer Anzahl von fünf möglichen Zielen in einem Umkreis von 10 km zugeordnet werden, von denen jedes Ziel eine eindeutige Koordinatenposition aufweist, welche der Vorrichtung 100 bekannt oder zumindest durch die Vorrichtung 100 ermittelbar ist. Bei manchen weiteren Ausführungsbeispielen ist das Berechnungsmodul 130 dazu ausgebildet, basierend auf der Ortsinformation 114 ein Anforderungssignal an ein weiteres Speichermodul zu senden, welches ein Bereitstellen einer der Ortsinformation 114 entsprechenden Koordinatenangabe bewirkt. Der Ort kann anders ausgedrückt auch automatisch durch bestehende Dienste ermittelt werden, wenn Schlüsselwörter angegeben werden (z.B. Theater, Tankstelle, Werkstatt, etc.). Somit kann das weitere Speichermodul z. B. von einem Rechner umfasst sein, welcher über Internet mit dem Speichermodul 110 verbunden ist (Server), und auf dem ein entsprechender Dienst installiert ist. Auch kann das weitere Speichermodul von einer weiteren Vorrichtung umfasst sein, auf der ein weiterer Mobilitätsagent läuft, und die einem weiteren Nutzer zugeordnet ist.

Die Zeitdauer 122 wird bei einigen Ausführungsbeispielen von dem Zuordnungsmodul 120 basierend auf der Ortsinformation 114 festgelegt. Mit anderen Worten kann die Zeitdauer 122 mit einer Entfernung einer aktuellen oder vorangehenden Position des Nutzers von der von einem Ort, welcher der Ortsinformation 114 für eine folgende Aktivität entspricht, ansteigen oder schrumpfen. Das Zuordnungsmodul 120 kann ferner dazu ausgebildet sein, der wenigstens einen Kombination aus dem möglichen Beginn 121 der Aktivität und der möglichen Zeitdauer 122 der Aktivität den Gewichtungskoeffizienten 123 basierend auf einer Entfernung zwischen einer der Ortsinformation 114 entsprechenden Position und einer Ausgangsposition des Nutzers zuzuordnen. Mit anderen Worten können mit zunehmender räumlicher Entfernung finanzielle Kosten (etwa bei Zug- oder Busfahrten oder durch Spritverbrauch) oder auch zeitliche Kosten (die ggf. einer zeitlichen Entfernung entsprechen können) ansteigen, wodurch sich der Gewichtungskoeffizient 123 entsprechend erhöhen kann.

Wie eingangs bereits beschrieben kann die mögliche Zeitdauer 122 eine reine Ausführungszeit der Aktivität angeben. Diese kann abhängig von Randbedingungen, wie z.B. Wetter, Verkehr oder Tageszeit (die beispielsweise dem möglichen Beginn 121 der Aktivität entsprechen kann) schwanken. Die Zeitdauer 122 kann durch das System automatisch bestimmt werden (z. B. Fahrtdauer einer Navigation). Auch ist es möglich, dass die Zeitdauer 122 als Vorgabe des Benutzers durch diesen festgelegt wird (z. B. Dauer eines Treffens). Mit anderen Worten kann die Zeitdauer 122 bereits dem von der Information über die Aktivität 111 umfassten benutzerdefinierten Zeitraum 112 entsprechen. Dies kann beispielsweise wünschenswert sein, wenn eine Aktivität mit einer vordefinierten Ausführungszeit für einen festen Termin vorgesehen ist. Beispielsweise kann der Benutzer für mittwochs um 16:00 Uhr einen Termin für ein zweistündiges Seminar auf dem Speichermodul 110 hinterlegen.

Bei einem anderen Ausführungsbeispiel kann der Zeitraum 112 einen Gesamtzeitraum bezeichnen, in dem eine Aktivität prinzipiell stattfinden kann. Damit kann der Zeitraum 112 mindestens so lang sein wie die Zeitdauer 122 der Aktivität. Die Differenz aus Zeitraum 112 und Zeitdauer 122 der Aktivität kann eine Pufferzeit darstellen, welche von der Vorrichtung 100 bei der Planung zur Verbesserung der Kosten verwendet werden kann.

Eine weitere mögliche Teilinformation kann einen Typ der Aktivität umfassen. Es kann dabei verschiedene Typen von Aktivitäten geben, welche ggf. unterschiedlich behandelt werden können. Eine Aktivität kann einem, aber auch mehreren Typen zugeordnet sein. Ein Typ kann beispielsweise ein Einkauf sein, der durch eine Liste von zu erwerbenden Objekten charakterisiert ist. Optional kann die Information über eine Aktivität vom Typ "Einkauf" eine Einkaufsliste aufweisen, die zu kaufende Objekte umfasst. Bei diesem Aktivitätentyp kann hinter einem Objekt ein zugehöriger Laden automatisch hinterlegt sein, oder Geschäfte gesucht werden, die möglichst viele Objekte gleichzeitig abdecken oder benutzerdefinierten Präferenzen entsprechen.

Ein anderer Typ kann eine Fahrt sein, und dadurch definiert sein, dass der Ort einer vorherigen Aktivität nicht dem Ort der Aktivität mit dem Typ "Fahrt" entspricht, also einen Transport erforderlich machen kann. Dieser Aktivitätstyp kann z. B. automatisch von der Vorrichtung 100 geplant werden, und somit eine entsprechende Benutzereingabe unter Umständen entfallen. Bei einigen Ausführungsbeispielen entspricht die Ausgangsposition einer der zusätzlichen Aktivität zugeordneten zusätzlichen Ortsinformation. Mit anderen Worten kann eine Aktivität $A_1$ an einem Ort $X_1$ ausgeführt

werden, und der Benutzer daraufhin angewiesen werden, unmittelbar von dort zu einem Ort $X_2$ zu fahren, um dort eine Aktivität $A_2$ zu erledigen. Somit kann eine Rückfahrt zu einer Ausgangsposition vor dem Ausführen der Aktivität $A_1$ (z. B. nach Hause oder ins Büro) vermieden werden.

Optional kann eine Aktivität des Typs "Fahrt" eine Buchung von Tickets oder Übernachtungen, Reservierung von Parkplätzen oder anderen Resourcen durch die Vorrichtung 100 erlauben. Anders ausgedrückt kann der auf der Vorrichtung 100 laufende Mobilitätsagent in Folge einer Voreinstellung durch den Benutzer dazu ausgebildet sein, z.B. durch Kommunikation mit einem Server über Internet eine Online-Buchung durchzuführen.

Weitere Aktivitätstypen umfassen berufliche Arbeit, die persönlich ohne Treffen mit Anderen durchgeführt wird, oder private Arbeit, die persönlich ohne Treffen mit Anderen durchgeführt wird. Ein anderer Aktivitätstyp ist ein Treffen, z.B. ein berufliches oder privates Treffen mit Anderen. Eine Aktivität vom Typ "Treffen" kann möglicherweise einen Informationsaustausch zwischen dem Mobilitätsagenten des Nutzers über die Vorrichtung 100 mit einem anderen Mobilitätsagenten eines anderen Nutzers bewirken oder erfordern, worauf im Folgenden noch näher eingegangen wird.

Der Gewichtungsterm 131 kann eine Kostenfunktion zum Verbessern von Fahrten und anderen Aufträgen repräsentieren. Eine beliebige Aufgabe oder Aktivität kann mit abstrakten Kosten belegt sein, die wenigstens tatsächliche finanzielle Kosten der Durchführung (z.B. für eine Fahrt) und virtuelle zeitabhängige Kosten umfassen. Die abstrakten Kosten können durch den Gewichtungskoeffizienten 123 repräsentiert werden. Die zeitabhängigen Kosten können dazu verwendet werden, um einen z. B. tageszeitabhängigen Zeitaufwand zu berücksichtigen, oder sogar die Durchführung der Aktivität in "verbotenen" Zeiten zu bestrafen. "Verbotene" Zeiten können sich aus einer Benutzereingabe heraus ergeben, und sich auf Zeiten beziehen, an dem eine Ausführung einer Aktivität nicht möglich oder aus Nutzersicht nicht sinnvoll oder gewünscht ist. Bei einem solchen Ausführungsbeispiel umfasst die von dem Speichermodul 110 gespeicherte Information 111 ein präferiertes Zeitintervall 113 für den möglichen Beginn 121 und die mögliche Zeitdauer 122 der Aktivität innerhalb des Zeitraumes 112. Dieses präferierte Zeitintervall 113 kann beispielsweise ein hartes Kriterium (fester Termin) sein. Die Information 111 umfasst bei manchen Ausführungsbeispielen ferner einen präferierten Zeitpunkt für den Beginn 121 der Aktivität. Dieser kann bei der Untersuchung von Permutationen der Aktivitäten aus der Aktivitätsliste einen Ankerpunkt, oder mit anderen Worten, einen einzig möglichen Beginn darstellen, z. B. kann der Benutzer als Aktivität vorsehen, sein Kind um 8:00 morgens zur Schule zu bringen. Ferner kann das Zuordnungsmodul 110 dazu ausgebildet sein, den Gewichtungskoeffizienten 123 auf einen vorgegebenen Wert oberhalb des vordefinierten Grenzwertes 132 zu setzen, wenn der mögliche Beginn 121 der Aktivität außerhalb des präferierten Zeitintervalls 113 liegt. Mit anderen Worten, wenn z. B. eine Aufgabe nur in dem präferierten Zeitintervall 113 durchgeführt werden soll, so kann man für alle Zeiten außerhalb dieses Intervalls Kosten $K_0$ ansetzen, die höher sind als die maximal akzeptablen Kosten $K_{max}$. Dementsprechend kann das präferierte Zeitintervall 113 auch als erlaubter Zeitbereich bezeichnet werden.

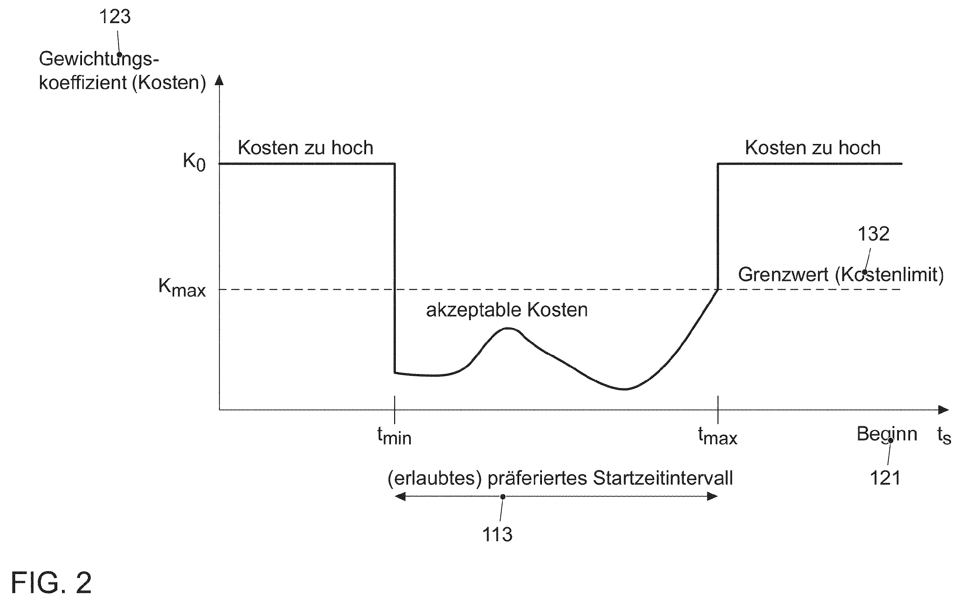

Dies ist in graphischer Form in Fig. 2 dargestellt, welche eine exemplarische Kostenfunktion für eine Aktivität mit beschränktem erlaubtem Zeitbereich zeigt. Dabei steht $t$ für den Beginn 121 (Startzeit) der Aktivität. Eine Aktivität zu einer "verbotenen" Zeit außerhalb des erlaubten Zeitbereichs 113 für diese Aktivität kann beispielsweise eine Fahrt zu einem Postamt um 3:00 Uhr nachts umfassen. Das präferierte Zeitintervall 113 wird durch eine früheste Startzeit $t_{min}$ und eine späteste Startzeit $t_{max}$ begrenzt. Außerhalb davon betragen die Kosten (und somit der Gewichtungskoeffizient 123) den Wert $K_0$. Bei einigen Ausführungsbeispielen ist das Zuordnungsmodul 120 mit anderen Worten dazu ausgebildet, den Gewichtungskoeffizienten 123 basierend auf einer zeitlichen Lage des möglichen Beginns 121 der Aktivität relativ zu dem präferierten Zeitintervall 113 zu bestimmen. Innerhalb des präferierten Zeitintervalls 113 können die Kosten unter $K_{max}$ liegen. Hierbei kann es möglich sein, dass die Kosten für eine Aufgabe zeitvariant sind, also davon abhängen, wann eine Aufgabe begonnen wird. Die Kosten können, wie Fig. 2 zeigt, schwanken, beispielsweise aufgrund von wechselhaftem Verkehrsaufkommen.

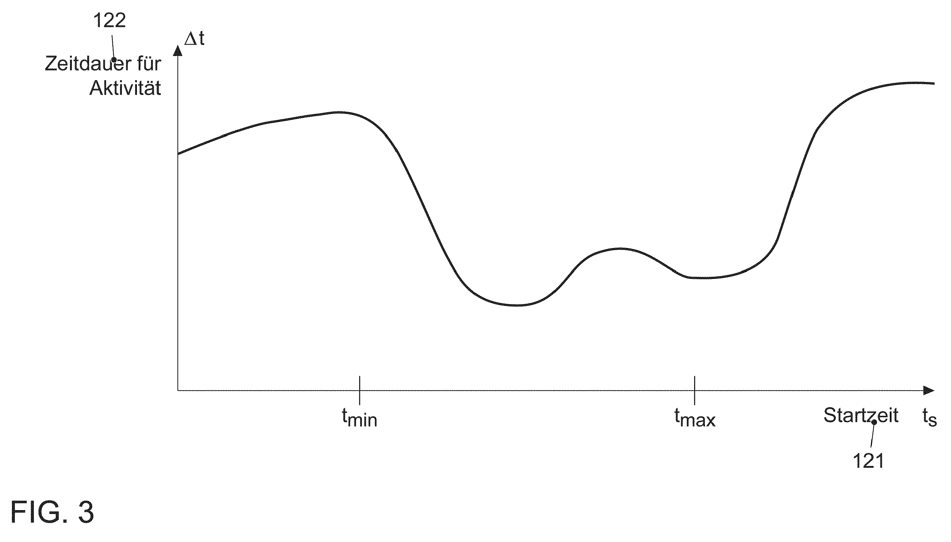

Bei einigen Ausführungsbeispielen ist das Zuordnungsmodul 110 dazu ausgebildet, die mögliche Zeitdauer 122 abhängig von dem möglichen Beginn 121 der Aktivität, und/oder umgekehrt, festzulegen, was anhand von Fig. 3 graphisch verdeutlicht wird. Die benötigte Zeitdauer für die Aktivität kann somit eine weitere Einflussgröße bei der Aktivitätsplanung darstellen. Anders ausgedrückt kann die mit $\Delta t$ bezeichnete mögliche Zeitdauer 122 abhängig von einer Tageszeit (z.B. durch Verkehrsschwankungen bei Fahrten) oder von anderen Größen wie Wetterbedingungen sein. Der Mobilitätsagent kann gegebene Umweltbedingungen analysiert und Schätzungen für die zu erwartende Zeitdauer einer Aktivität in Abhängigkeit von dem Beginn 121 (hier als Startzeit $t_s$ bezeichnet) erstellen.

Eine zeitliche Planung einer Abfolge von Aktivitäten des Nutzers kann beispielsweise durch Verringerung oder sogar Minimierung von Kosten erfolgen. Die zuvor durch den Nutzer auf dem Speichermodul 110 abgespeicherten Aktivitäten können sequentiell durchgeführt werden. Dabei kann der Mobilitätsagent alle oder eine vorgegebene Menge an zulässigen Permutationen untersuchen. Im Folgenden wird ein Ausführungsbeispiel für ein Vorgehen beschrieben, welches zu einer Auswahl einer optimalen Aktivitätssequenz führen kann.

Bei einigen Ausführungsbeispielen wird für jede Aktivität ein Gewichtungskoeffizient 123 in Form einer Kostenfunktion $S(t_s)$ definiert, die die finanziellen Kosten $K(t_s)$ und die Zeitdauer $\Delta t(t_s)$ in Abhängigkeit von der Startzeit $t_s$ erfasst:

$$S(t_s) = \alpha f_K(K(t_s)) + \beta f_{\Delta t}(\Delta t(t_s))$$

Dabei werden Kosten und Zeitdauer als Linearkombination mit den Proportionalitätsfaktoren $\alpha$ und $\beta$ gewichtet. Der Zeitdauer können also auch Kosten zugeordnet werden, da ggf. ein zu hoher Zeitaufwand für eine Aktivität zu vermeiden ist.

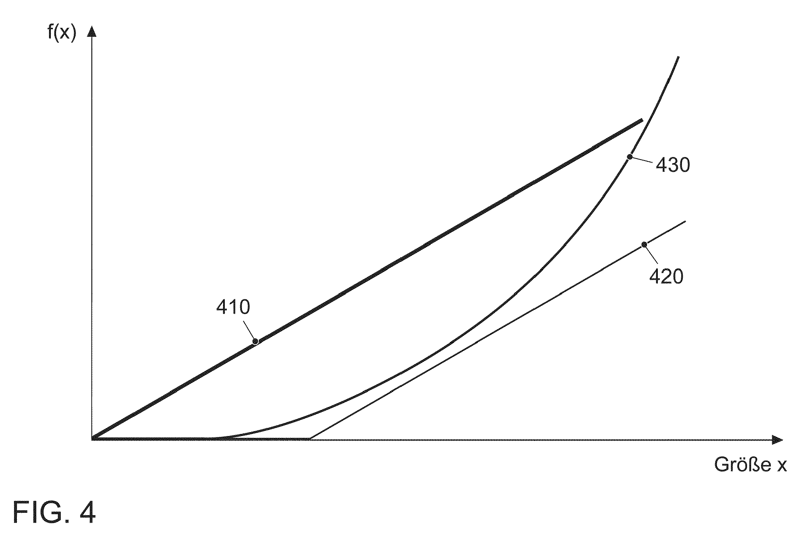

Bei manchen Ausführungsbeispielen ist das Zuordnungsmodul 120 dazu ausgebildet, die Zeitdauer 122 oder den möglichen Beginn 121 der Aktivität dem Gewichtungskoeffizienten 123 über eine nichtlineare Beziehung zuzuordnen. Kosten und Zeitdauer können somit linear oder auch nichtlinear in die Gesamtkosten $S(t_s)$ eingehen, und mit einer Abbildungsfunktion $f_K(K)$ bzw. $f_{\Delta t}(\Delta t)$ bewertet werden. In Fig. 4 sind einige Beispiele für Abbildungsfunktionen f skizziert. So kann z.B. ein kleiner Zeitaufwand (z.B. höchstens 5 Minuten) nicht in die Gesamtkosten oder den Gewichtungskoeffizienten 123 eingehen, oder ein hoher Kostenaufwand überproportional. Außerhalb des präferierten Zeitintervalls 113 gelegene Startzeiten oder übermäßiger Zeitaufwand können ebenfalls zu einem überproportionalen Anstieg des Gewichtungskoeffizienten 123 führen, z.B. "Kind um 10:00 Uhr zur Schule bringen" oder "2 Stunden Fahrzeit von zu Hause zum Supermarkt". Die auf der x-Achse bezeichnete Größe x kann finanziellen Kosten, einem Zeitaufwand oder auch dem Gewichtungskoeffizienten entsprechen. Auf der y-Achse sind die Werte der Abbildungsfunktionen aufgetragen. Eine erste Abbildungsfunktion 410 entspricht einer linearen Beziehung. Eine zweite Abbildungsfunktion 420 entspricht einer linearen Beziehung mit einem Versatz, sodass Werte unterhalb eines x-Wertes, der dem Nulldurchgang der Abbildungsfunktion 420 entspricht, vernachlässigt werden. Eine dritte Abbildungsfunktion 430 entspricht einer nichtlinearen Beziehung, die hier beispielhaft als Parabel dargestellt ist. Somit kann eine Erhöhung des Wertes x stärker in den Gewichtungskoeffizienten eingehen, und so ggf. "bestraft" werden.

Die Kostenfunktion $S(t_s)$ kann nun in Abhängigkeit von der möglichen Startzeit $t_s$ im zulässigen Zeitintervall ausgewertet und beispielsweise der minimale Wert als Optimum oder ein innerhalb eines Toleranzbereichs um das Minimum gelegener Wert ausgewählt werden. Für eine Sequenz von Aktivitäten kann die Summe der (ggf. minimalen) Gesamtkosten der Einzelaktivitäten als Gesamtkosten $S_A$ berechnet werden:

$$S_A = \sum_{i=1}^{N} (S(t_s(A_i)) + \sum_{j=1}^{M} (S(t_s(O_j))$$

Dabei kann es möglich sein, z. B. für Fahrtaktivitäten zu vermeiden, dass aufeinanderfolgende Fahrten durch Pausen getrennt sind. Eine Verringerung oder sogar Minimierung der Gesamtkosten kann dadurch erfolgen, dass die Reihenfolge der Aufgaben variiert wird, und dabei optional nur mit Rücksicht auf feste Termine oder präferierte Zeitintervalle erlaubte Sequenzen zugelassen werden. Für jede dieser Konfigurationen können die Gesamtkosten ausgerechnet, und die Konfiguration mit den minimalen Kosten $S_A$ ausgewählt werden. Da die Anzahl von Variationen prinzipiell sehr groß sein kann, kann durch Heuristiken ihre Zahl reduziert werden. So könnte z.B. als zusätzliches Kriterium definiert sein, dass möglichst viele Fahrten zeitlich aneinander grenzen, um die Nutzung von Zeiträumen möglichst wenig zu fragmentieren. Bei Fahrten kann, wie zuvor erwähnt, der Endpunkt einer Strecke der Startpunkt der nächsten sein. Auch dadurch kann die Anzahl der Permutationen eingeschränkt werden. Ebenso können festgelegte Termine oder Orte als "Ankerpunkt" ohne Variabilität dienen. Für eine Aktivität können innerhalb eines begrenzten Zeitraumes eine Kosten- und Durchführungsdauerschätzung vorgenommen werden, da sich die Kosten und der Zeitbedarf z.B. mit der Verkehrssituation dynamisch ändern können.

Zur Ermittlung des Optimums kann bei einer wie beschrieben eingeschränkten Anzahl von Konfigurationen eine erschöpfende Suche durchgeführt werden. Wird der Aufwand dafür zu hoch, können bei manchen Ausführungsbeispielen stochastische Verfahren zur Verbesserung eingesetzt werden. So kann z.B. durch evolutionäre Algorithmen eine globale Optimierung der Parameter durchgeführt werden, bei der die Gesamtkosten zumindest in der Nähe des globalen Minimums (z.B. höchstens 10 % darüber) liegen.

Wie bereits zuvor erwähnt, kann der Mobilitätsagent eine Software sein, deren Funktionalität auf der Vorrichtung 100 (vgl. Fig. 1) läuft. Die Vorrichtung kann einem Server (Volkswagen Cloud) entsprechen. Ein Betreiber des Servers, auf dem der Mobilitätsagent läuft, wird im Folgenden als "interner Dienstleister", und ein beliebiger anderer Betreiber eines weiteren Servers (z. B. für Verkehrs-, Wetter- oder öffentliche Nahverkehrsdienste) als "externer Dienstleister" bezeichnet. Eine Mobilitätsplanung für registrierte Benutzer kann automatisch im Hintergrund durchgeführt, und dabei der Benutzer auf einem aktuellen Stand gehalten werden.

Der Benutzer kann Mobilitätszeitfenster in seinem Kalender sowie Randbedingungen wie z.B. Routenplanung mit schnellster Strecke, minimalen Kosten oder ökologischer Optimierung definieren. Die Ziele können bei Freigabe direkt aus dem Kalender übernommen werden, so dass dafür eine Planung möglich ist, bei der weitere Eingaben ggf.

entfallen können. Weiterhin kann der Benutzer nicht eindeutig terminierte Mobilitätsaufgaben (z.B. Einkäufe) angeben, die vom Mobilitätsagenten zeitlich verschoben werden können, um die Planung zu verbessern oder sogar zu optimieren. Der Benutzer kann weitere Präferenzen definieren, die individuell veränderbar sind: Wahl der möglichen Verkehrsmittel, Laufanteil bei multimodalen Verkehrswegen, Interaktion mit Agenten anderer Personen (z.B. zu einer Familienabstimmung oder für eine Mitfahrgemeinschaft zu einem Arbeitsplatz).

Neben solchen Benutzeranforderungen, die die Software bei einem Ausführungsbeispiel aus Kalender und Aufgabenliste automatisch extrahiert, kann der Mobilitätsagent auf dem Server die Möglichkeit besitzen, Datenbanken im Internet, die benutzerunabhängig sind, zu nutzen. Datenbanken können Kartendaten für Routenplanung, aktuelle Verkehrs- und Wetterinformationen, Fahrpläne eines öffentlichen Nah- und Fernverkehrs, Maut- und Parkgebühren, aktuell freien Parkraum oder Öffnungszeiten von Geschäften umfassen. Da für mehrere Personen diese Informationen gleichermaßen relevant sein können, kann es wünschenswert sein, die Daten in einer Serverinfrastruktur im Internet zu speichern.

Der Mobilitätsagent auf dem Server kann dazu ausgebildet sein, auf persönliche und allgemeine Informationen, z. B. im Internet (Cloud) zuzugreifen. Der Mobilitätsagent kann ferner dem Benutzer eine Reiseplanung vorschlagen, und der Benutzer kann diese optional akzeptieren. Somit können die entsprechenden Reisetermine und -ziele in den Kalender eingetragen werdem, und auf verschiedenen Wegen dem Benutzer mitgeteilt werden (z. B. persönliche Webseite mit Reisedetails, Benachrichtigung per Email und in sozialen Netzwerken, Push-Nachrichten, etc.). Bei Akzeptanz durch den Benutzer können die Navigationziele durch die Software, beispielsweise vermittels einer von der Vorrichtung umfassten Datenübertragungsschnittstelle, in ein Bordgerät eines auf dem Weg zu nutzenden Fahrzeugs übertragen, und zu einer vorgegebenen Zeit aktiviert werden. Dabei kann optional ein Übermitteln von Navigationszielen auch an andere Benutzer erfolgen. Sind externe Dienstleister involviert (z.B. Mietwagenfirma, öffentlicher Nah-/Fernverkehr), so kann der Mobilitätsagent dazu ausgebildet sein, durch Zugriff auf einen externen Server des externen Dienstleisters eine Transaktion durchzuführen, beispielsweise eine Reservierung oder Buchung.

Durch einige Ausführungsbeispiele können Mobiltitätsbedürfnisse des Benutzers nachgebildet werden. Dabei kann der Mobilitätsagent zu beliebigen Zeiten aktiv sein, oder auch sich zeitlich ändernde Randbedingungen (z.B. tageszeitabhängige Maut oder Staus) berücksichtigen, und die Planung entsprechend anpassen. Der Mobilitätsagent kann verschiedene Funktionen wie Routenplanung und Organisation eines persönlichen Kalenders zusammenführen. Dadurch kann es möglich sein, eine globale Verbesserung oder Optimierung (z.B. von Gesamtkosten) durchzuführen. Der Mobilitätsagent kann mit externen Dienstleistern kommunizieren, aber auch mit anderen Mobilitätsagenten anderer Benutzer, um z.B. eine Fahrgemeinschaft dynamisch zu organisieren. Dabei kann der Mobilitätsagent dem anderen Mobilitätsagenten beispielsweise Informationen über Fahrtzeiten, Teilnehmer oder evtl. andere Zwischenstopps übermitteln. Hingegen können konventionelle Lösungen in vielen Fällen "Insellösungen" sein, die einen Alltagsablauf des Benutzers aus dessen Sicht nicht oder lediglich unzureichend berücksichtigen. Durch eine Freigabe von Zeiten oder relevanten Eintragungen im Kalender können verschiedene Aktivitäten (Transport, Einkäufe, Aufgaben, Treffen mit Dritten, etc.) entlang der Zeitachse eindeutig organisiert und für den Benutzer verständlich dargestellt werden.

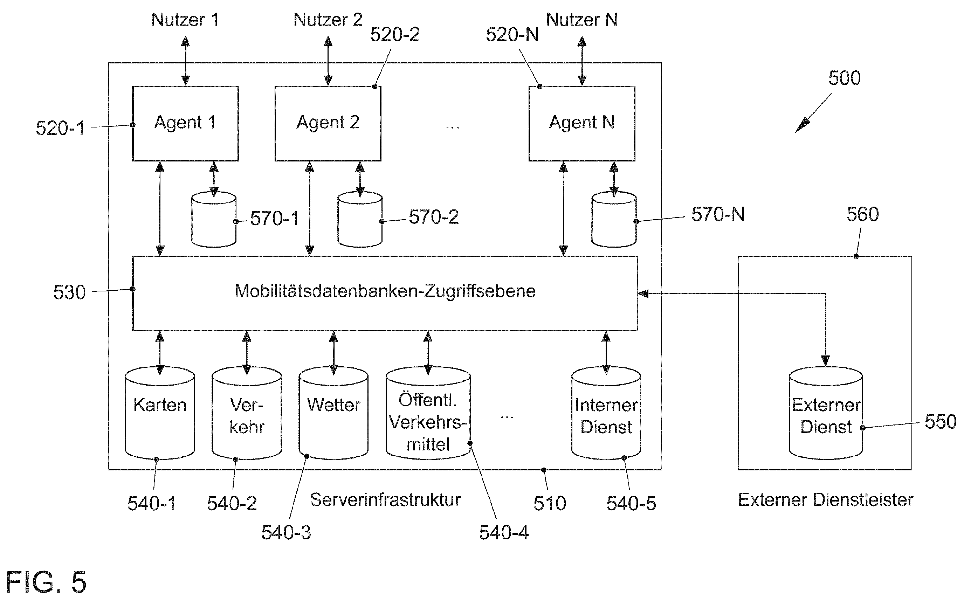

Eine mögliche Architektur des Mobilitätsagenten ist in Fig. 5 dargestellt. Ein beliebiger Benutzer n aus einer Menge von N Benutzern (N ist hier eine beliebige natürliche Zahl) eines Systems 500 wird durch einen jeweiligen Mobilitätsagenten n in einer Serverinfrastruktur 510 repräsentiert. Einem Mobilitätsagenten n ist ein Softwaremodul 520-1; 520-2; ...; 520-N zugeordnet, welches dazu ausgebildet ist, über eine Zugriffsebene 530 (Mobility Services Access Layer) auf Mobilitätsdatenbanken 540-1; 540-2; 540-3; 540-4; 540-5, und auch auf einen Dienst 550 eines externen Anbieters 560 zuzugreifen. Der externe Anbieter kann von einem Betreiber des Systems 500, welches die Serverinfrastruktur 510 umfasst, verschieden sein. Die Mobilitätsdatenbanken 540-1; 540-2; 540-3; 540-4; 540-5 können einen internen Dienst 540-5 umfassen, der z. B. von einem Betreiber des Servers zur Verfügung gestellt wird, auf dem der Mobilitätsagent läuft.

Der Mobilitätsagent fordert bei dem hier gezeigten Ausführungsbeispiel zur Planung die Informationen aus den Datenbanken 540-1; 540-2; 540-3; 540-4; 540-5 über die Zugriffsebene 530 an. Einem Mobilitätsagenten n ist dabei jeweils ein privater Speicher 570-1; 570-2; ...; 570-N zugeordnet, der mit Daten des jeweiligen Benutzers n befüllbar ist, und nicht für andere Benutzer zugänglich ist. Beispielsweise kann ein Zugriff auf einen privaten Speicher 570-n eine Eingabe eines von Benutzer n definierten Passwortes erfordern. Ein Agent kann aber mit anderen Agenten über die Zugriffsebene 530 Kontakt aufnehmen, um Informationen über einen Dienst bereitzustellen (z.B. Plätze für eine Fahrgemeinschaft) oder um Informationen über einen Dienst von einem anderen Agenten zu empfangen (z.B. Mitfahrgelegenheiten).

Ein Agent kann durch den Benutzer dazu autorisiert werden, Transaktionen durchzuführen (z.B. eine Reisebuchung). Dafür kann er auch ausgebildet sein, Beträge auszugeben bzw. auch einzunehmen, wenn der Agent eine Dienstleistung für Andere erbringt (Bsp.: Anbieten von Plätzen für eine Mitfahrgemeinschaft).

Der Agent kann eine Person als Benutzer repräsentieren oder aber auch eine Institution. So könnte z.B eine Gemeinde an Feedback über den Straßenzustand interessiert sein und dafür als Gegenleistung kostenloses Parken anbieten. Wenn ein Fahrzeug dann z.B. durch seine Sensorik ein Schlagloch detektiert, kann der Agent des Fahrzeugnutzers diese Information mit dem Agenten der Gemeinde austauschen.

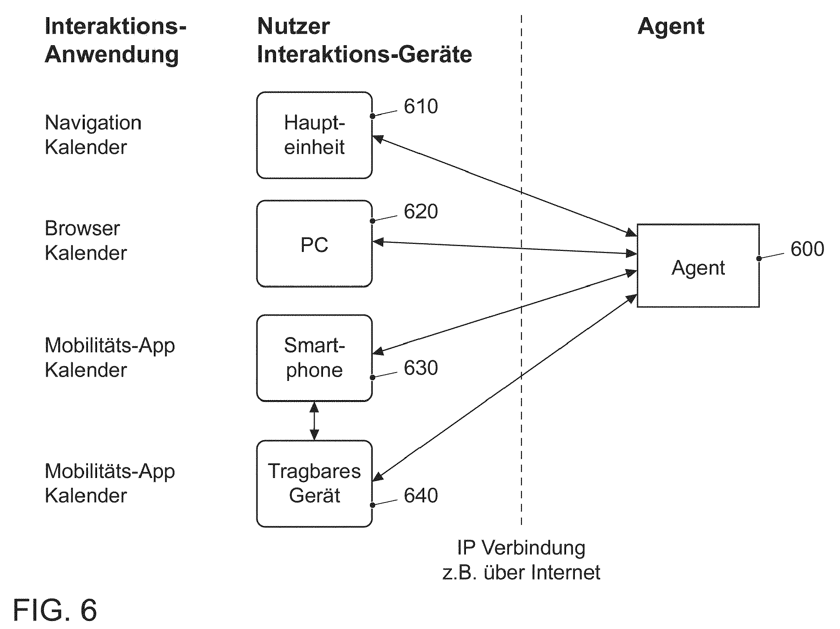

Eine Interaktion zwischen einem Softwaremodul 600 des Mobilitätsagenten und dem Benutzer ist in Fig. 6 dargestellt und kann über verschiedene Kanäle erfolgen. Beispielsweise in einem Fahrzeug kann die Interaktion über eine Haupteinheit 610 (Head Unit) erfolgen, was die Interaktion bezüglich einer Ergonomie verbessern kann. Dabei können Mobiltitätsanfragen per Sprach- oder Schrifteingabe gestellt werden. Alternativ kann die Interaktion mit dem Agenten an einem persönlichen Computer (PC) 620 oder auch mit einem Mobilgerät, z. B. einem Smartphone 630 erfolgen. Auch kann die Darstellung der Mobilitätsplanung auf diesen Geräten oder auch auf einem tragbaren Gerät 640 (Wearable), z.B. einer Smartwatch, erfolgen. Die Interaktion mit dem Softwaremodul 600 des Mobilitätsagenten auf dem Server kann eine Internetprotokoll- (IP-) Verbindung sein, und z. B. mittels des Internets erfolgen. Bei Verwendung einer Haupteinheit 610 kann eine Interaktionsanwendung eine Navigation oder einen Kalender aufweisen oder von Programmen, die eine Navigation oder einen Kalender aufweisen, umfasst sein. Bei Verwendung eines PCs 620 kann eine Interaktionsanwendung ein Browser sein und einen Kalender aufweisen. Bei Verwendung eines Smartphones 630 oder eines tragbaren Gerätes 640 kann eine Interaktionsanwendung eine Mobilitäts-App sein und einen Kalender aufweisen.

Alternativ zu einem Server kann ein Softwaremodul des Mobilitätsagenten auf einem mobilen oder stationären Endgerät implementiert sein. Das Softwaremodul könnte z. B. auf einem Zentralcomputer eines Fahrzeugs, auf einem PC oder einem mobilen Gerät wie einem Smartphone oder Tablet laufen und Daten von einem weiteren, externen Gerät anfordern. Bei einem solchen Ausführungsbeispiel, bei dem der Mobilitätsagent auf einem Server implementiert ist, kann eine verbesserte Nutzung von Rechenleistung oder auch ein erleichterter Abgleich von (auch widerstreitenden) Anforderungen von einzelnen Benutzern unter Umständen möglich sein.

Eine serverbasierte Lösung kann in Hinblick auf eine Anzahl der miteinander kommunizierenden Agenten eine bessere Skalierbarkeit aufweisen. Viele Daten können für die Agenten gleich sein, z.B. Karten oder Wetter, so dass eine zentrale Speicherung womöglich effizienter ist. Ebenso kann eine bessere Ausfallsicherheit bei einer Serverlösung gegeben sein, weil ggf. ein redundanter Betrieb möglich sein kann. Der Benutzer kann dabei eine kontinuierliche oder wenigstens regelmäßige Verbindung zu dem Softwaremodul des Mobilitätsagenten auf dem Server verwenden, um auf einem aktuellen Planungsstand zu bleiben, kann aber auch bei lokaler Durchführung einer Navigation wenigstens teilweise autonom weiter navigieren.

Herkömmliche Lösungen können die Aufgabe einer Tagesplanung in disparate Bereiche, z. B. Navigation, Aufgabenliste, Treffen mit Freunden ausmachen, etc. partitionieren. Das vorliegende Konzept des Mobilitätsagenten gemäß einiger Ausführungsbespiele kann diese Trennung der Aufgaben aufheben, und sie aus Sicht einer Mobilitätsplanung zusammenführen. Damit kann für den Nutzer eine Gesamtplanung ermöglicht werden, die ggf. frei von Widersprüchen sein, eine verbesserte Nachvollziehbarkeit in einem Kalender des Nutzers ermöglichen, oder sich dynamisch anpassen kann.

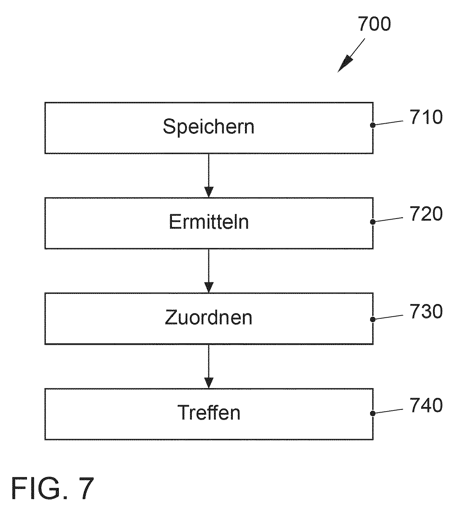

Fig. 7 zeigt ein Flussdiagramm eines Verfahrens 700 zum Erstellen einer zeitlichen Abfolge von Aktivitäten eines Nutzers gemäß einem Ausführungsbeispiel. Das Verfahren 700 umfasst ein Speichern 710 wenigstens einer Information über eine geplante Aktivität des Nutzers. Die Information über die Aktivität umfasst wenigstens einen für den Nutzer zur Verfügung stehenden Zeitraum zur Durchführung der Aktivität. Das Verfahren 700 umfasst außerdem ein Ermitteln 720 wenigstens einer Kombination aus einem möglichen Beginn und einer möglichen Zeitdauer der Aktivität innerhalb des dem Nutzer zur Verfügung stehenden Zeitraums. Das Verfahren 700 umfasst zudem ein Zuordnen 730 eines Gewichtungskoeffizienten zu der wenigstens einen Kombination. Das Verfahren 700 umfasst ferner ein Treffen 740 einer Auswahl aus der wenigstens einen Kombination aus möglichem Beginn und möglicher Zeitdauer der Aktivität derart, dass ein Gewichtungsterm, welcher den der ausgewählten Kombination zugeordneten Gewichtungskoeffizienten umfasst, einen vordefinierten Grenzwert nicht überschreitet, und die Auswahl aus Beginn und Zeitdauer der Aktivität eine zusätzliche Zeitdauer einer im Speichermodul gespeicherten zusätzlichen Aktivität nicht überschneidet. Somit kann eine Planung von Aktivitäten geschaffen werden, bei der Widersprüche in einem zeitlichen Ablauf möglicherweise entfallen können. Ferner kann unter Umständen eine zeitliche Flexibilität bei der Planung verbessert werden, oder eine Möglichkeit zur Planung geschaffen werden, welche eine Anpassung der Planung an zeitlich variable Randbedingungen gestattet.

Ausführungsbeispiele können im Zusammenhang mit einem Fahrzeug einsetzbar sein. Die Mobilitätsplanung vermittels eines Mobilitätsagenten gemäß Ausführungsbeispielen kann auch über ein Verkehrsmittel hinausgehen. Mittels Ausführungsbeispielen kann eine multi-modale Planung mit weiteren Verkehrsmitteln erfolgen und bewertet werden. Das Konzept einer Mobilitätsagenten-Software, die für einen Benutzer agiert, kann auf andere Bereiche jenseits der Mobilität erweiterbar sein. Ein anderes Einsatzgebiet kann z.B. eine Verbesserung oder Optimierung von Ressourcennutzung (Verringerung oder Minimierung der Umweltbelastung) umfassen, bei dem Nutzer Ressourcen automatisiert anbieten (z.B. $CO_2$-Kontingent), und andere diese aufkaufen können (z.B. Fabrikbetreiber).

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein. Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Bezugszeichenliste**

| | |
|---|---|
| 100 | Vorrichtung |

| 110 | Speichermodul |
| 111 | Information über die Aktivität |
| 112 | Zeitraum |
| 113 | Präferiertes Zeitintervall |
| 114 | Ortsinformation |
| 120 | Zuordnungsmodul |
| 121 | Möglicher Beginn der Aktivität |
| 122 | Mögliche Zeitdauer der Aktivität |
| 123 | Gewichtungskoeffizient |
| 124 | Weiterer möglicher Beginn der Aktivität |
| 125 | Weitere mögliche Zeitdauer der Aktivität |
| 126 | Weiterer Gewichtungskoeffizient |
| 130 | Berechnungsmodul |
| 131 | Gewichtungsterm |
| 132 | Grenzwert |
| 133 | Zeitdauer einer zusätzlichen Aktivität |
| 410 | Erste Abbildungsfunktion |
| 420 | Zweite Abbildungsfunktion |
| 430 | Dritte Abbildungsfunktion |
| 500 | System |
| 510 | Serverinfrastruktur |
| 520-1; 520-2; 520-N | Softwaremodul |
| 530 | Zugriffsebene |
| 540-1; 540-2; 540-3; 540-4; 540-5 | Datenbanken |
| 550 | Dienst |
| 560 | Externer Anbieter |
| 570-1; 570-2; 570-N | Privater Speicher |
| 600 | Softwaremodul |
| 610 | Haupteinheit |
| 620 | PC |
| 630 | Smartphone |
| 640 | Tragbares Gerät |
| 700 | Verfahren |
| 710 | Speichern |
| 720 | Ermitteln |
| 730 | Zuordnen |
| 740 | Treffen |

**Patentansprüche**

1. Vorrichtung (100) zum Erstellen einer zeitlichen Abfolge von Aktivitäten eines Nutzers, umfassend:

ein Speichermodul (110), welches dazu ausgebildet ist, wenigstens eine Information über eine geplante Aktivität (111) des Nutzers zu speichern, wobei die Information über die Aktivität (111) wenigstens einen für den Nutzer zur Verfügung stehenden Zeitraum (112) zur Durchführung der Aktivität umfasst;
ein Zuordnungsmodul (120), welches dazu ausgebildet ist, wenigstens eine Kombination aus einem möglichen Beginn (121) und einer möglichen Zeitdauer (122) der Aktivität innerhalb des dem Nutzer zur Verfügung stehenden Zeitraums (112) zu ermitteln und der wenigstens einen Kombination einen Gewichtungskoeffizienten (123) zuzuordnen; und
ein Berechnungsmodul (130), welches dazu ausgebildet ist, aus der wenigstens einen Kombination aus möglichem Beginn (121) und möglicher Zeitdauer (122) der Aktivität eine Auswahl derart zu treffen, dass ein Gewichtungsterm (131), welcher den der ausgewählten Kombination zugeordneten Gewichtungskoeffizienten (123) umfasst, einen vordefinierten Grenzwert (132) nicht überschreitet, und die Auswahl aus Beginn (121) und Zeitdauer (122) der Aktivität eine zusätzliche Zeitdauer (133) einer im Speichermodul gespeicherten zusätzlichen Aktivität nicht überschneidet.

2. Vorrichtung (100) gemäß Anspruch 1, wobei das Zuordnungsmodul (120) dazu ausgebildet ist, die mögliche Zeitdauer (122) abhängig von dem möglichen Beginn (121) der Aktivität, und/oder umgekehrt, festzulegen.

3. Vorrichtung (100) gemäß einem der vorangegangenen Ansprüche, wobei das Speichermodul (110) dazu ausgebildet ist, die Information über die Aktivität (111) zu speichern, wobei die Information (111) eine vordefinierte Ortsinformation (114) für einen Ort der Aktivität umfasst.

4. Vorrichtung (100) gemäß Anspruch 3, wobei das Zuordnungsmodul (120) dazu ausgebildet ist, die Zeitdauer (122) basierend auf der Ortsinformation (114) festzulegen.

5. Vorrichtung (100) gemäß einem der Ansprüche 3 oder 4, wobei das Zuordnungsmodul (120) dazu ausgebildet ist, der wenigstens einen Kombination den Gewichtungskoeffizienten (123) basierend auf einer Entfernung zwischen einer der Ortsinformation (114) entsprechenden Position und einer Ausgangsposition des Nutzers zuzuordnen.

6. Vorrichtung (100) gemäß einem der Ansprüche 3 bis 5, wobei das Zuordnungsmodul (120) dazu ausgebildet ist, der wenigstens einen Kombination den Gewichtungskoeffizienten (123) zuzuordnen, wobei die Ausgangsposition einer der zusätzlichen Aktivität zugeordneten zusätzlichen Ortsinformation entspricht.

7. Vorrichtung (100) gemäß einem der Ansprüche 3 bis 6, wobei das Berechnungsmodul (130) dazu ausgebildet ist, basierend auf der Ortsinformation (114) ein Anforderungssignal an ein weiteres Speichermodul zu senden, welches ein Bereitstellen einer der Ortsinformation (114) entsprechenden Koordinatenangabe bewirkt.

8. Vorrichtung (100) gemäß einem der vorangegangenen Ansprüche, wobei das Berechnungsmodul (130) dazu ausgebildet ist:

die Kombination aus möglichem Beginn (121) und möglicher Zeitdauer (122) der Aktivität mit einer weiteren Kombination aus einem weiteren möglichen Beginn (124) und einer weiteren möglichen Zeitdauer (125) der Aktivität innerhalb des Zeitraums (112) zu vergleichen;
basierend auf dem Vergleichen ein lokales oder globales Minimum des Gewichtungsterms (131) zu ermitteln; und den möglichen Beginn (121) und die mögliche Zeitdauer (122) der Aktivität und/oder einen zusätzlichen möglichen Beginn und die zusätzliche mögliche Zeitdauer der zusätzlichen Aktivität, welche dem Minimum des Gewichtungsterms (131) innerhalb eines vordefinierten Toleranzbereichs entsprechen, an den Nutzer bereitzustellen.

9. Vorrichtung (100) gemäß einem der vorangegangenen Ansprüche, wobei das Speichermodul (110) dazu ausgebildet ist, die Information über die Aktivität (111) zu speichern, wobei die Information (111) ein präferiertes Zeitintervall (113) für den möglichen Beginn (121) und die mögliche Zeitdauer (122) der Aktivität innerhalb des Zeitraumes (112) umfasst.

10. Vorrichtung (100) gemäß Anspruch 9, wobei das Zuordnungsmodul (120) dazu ausgebildet ist, den Gewichtungskoeffizienten (123) basierend auf einer zeitlichen Lage des möglichen Beginns (121) der Aktivität relativ zu dem präferierten Zeitintervall (113) zu bestimmen.

11. Vorrichtung (100) gemäß einem der Ansprüche 9 oder 10, wobei das Zuordnungsmodul (120) dazu ausgebildet ist, die Zeitdauer (122) oder den möglichen Beginn (121) der Aktivität dem Gewichtungskoeffizienten (123) über eine nichtlineare Beziehung zuzuordnen.

12. Vorrichtung (100) gemäß einem der Ansprüche 9 bis 11, wobei das Zuordnungsmodul (120) dazu ausgebildet ist, den Gewichtungskoeffizienten (123) auf einen vorgegebenen Wert oberhalb des vordefinierten Grenzwertes (132) zu setzen, wenn der mögliche Beginn (121) der Aktivität außerhalb des präferierten Zeitintervalls (113) liegt.

13. Vorrichtung (100) gemäß einem der vorangegangenen Ansprüche, wobei das Zuordnungsmodul (120) dazu ausgebildet ist, der zusätzlichen Aktivität einen zusätzlichen Gewichtungskoeffizienten zuzuordnen, und wobei das Berechnungsmodul (130) dazu ausgebildet ist, den Gewichtungsterm (131) als Summe des Gewichtungskoeffizienten (123) und des zusätzlichen Gewichtungskoeffizienten zu berechnen.

14. Verfahren (700) zum Erstellen einer zeitlichen Abfolge von Aktivitäten eines Nutzers, umfassend:

Speichern (710) wenigstens einer Information über eine geplante Aktivität des Nutzers, wobei die Information über die Aktivität wenigstens einen für den Nutzer zur Verfügung stehenden Zeitraum zur Durchführung der Aktivität umfasst;

Ermitteln (720) wenigstens einer Kombination aus einem möglichen Beginn und einer möglichen Zeitdauer der Aktivität innerhalb des dem Nutzer zur Verfügung stehenden Zeitraums;

Zuordnen (730) eines Gewichtungskoeffizienten zu der wenigstens einen Kombination; und

Treffen (740) einer Auswahl aus der wenigstens einen Kombination aus möglichem Beginn und möglicher Zeitdauer der Aktivität derart, dass ein Gewichtungsterm, welcher den der ausgewählten Kombination zugeordneten Gewichtungskoeffizienten umfasst, einen vordefinierten Grenzwert nicht überschreitet, und die Auswahl aus Beginn und Zeitdauer der Aktivität eine zusätzliche Zeitdauer einer im Speichermodul gespeicherten zusätzlichen Aktivität nicht überschneidet.

15. Programm mit einem Programmcode zum Durchführen des Verfahrens gemäß Anspruch 14, wenn der Programmcode auf einem Computer, einem Prozessor oder einer programmierbaren Hardwarekomponente ausgeführt wird.

FIG. 1

FIG. 2

FIG. 3

f(x)

430

420

410

Größe x

FIG. 4

FIG. 5

**Interaktions-
Anwendung**

**Nutzer
Interaktions-Geräte**

**Agent**

Navigation
Kalender

Browser
Kalender

Mobilitäts-App
Kalender

Mobilitäts-App
Kalender

Haupteinheit — 610

PC — 620

Smartphone — 630

Tragbares
Gerät — 640

Agent — 600

IP Verbindung
z.B. über Internet

FIG. 6

EP 3 073 423 A1

700

| Speichern | 710 |

↓

| Ermitteln | 720 |

↓

| Zuordnen | 730 |

↓

| Treffen | 740 |

FIG. 7

Europäisches
Patentamt

European
Patent Office

Office européen
des brevets

## EUROPÄISCHER RECHERCHENBERICHT

Nummer der Anmeldung

EP 15 19 6059

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/004926 A1 (HORVITZ ERIC J [US] ET AL) 3. Januar 2008 (2008-01-03) * Zusammenfassung; Abbildung 15 * ----- | 1-15 | INV. G06Q10/04 G06Q10/06 |
| | | | **RECHERCHIERTE SACHGEBIETE (IPC)** |
| | | | G06Q |

Der vorliegende Recherchenbericht wurde für alle Patentansprüche erstellt

| Recherchenort | Abschlußdatum der Recherche | Prüfer |
|---|---|---|
| München | 12. Februar 2016 | Weidmann, Matthias |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

...................................................................................................
& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 19 6059

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2016

| Im Recherchenbericht angeführtes Patentdokument | Datum der Veröffentlichung | Mitglied(er) der Patentfamilie | Datum der Veröffentlichung |
|---|---|---|---|
| US 2008004926 A1 | 03-01-2008 | CN 101479720 A<br>EP 2038762 A1<br>US 2008004926 A1<br>WO 2008005186 A1 | 08-07-2009<br>25-03-2009<br>03-01-2008<br>10-01-2008 |

Für nähere Einzelheiten zu diesem Anhang : siehe Amtsblatt des Europäischen Patentamts, Nr.12/82